(19)

**Europäisches Patentamt**

**European Patent Office**

**Office européen des brevets**

(11)  **EP 4 513 387 A1**

(12)  **EUROPEAN PATENT APPLICATION**

(43) Date of publication:
   26.02.2025  Bulletin 2025/09

(51) International Patent Classification (IPC):
   $G06N\ 3/096^{(2023.01)}$      $G06N\ 3/045^{(2023.01)}$

(21) Application number: 24191228.6

(22) Date of filing: 26.07.2024

(52) Cooperative Patent Classification (CPC):
   G06N 3/045; G06N 3/096

(84) Designated Contracting States:
   AL AT BE BG CH CY CZ DE DK EE ES FI FR GB
   GR HR HU IE IS IT LI LT LU LV MC ME MK MT NL
   NO PL PT RO RS SE SI SK SM TR
   Designated Extension States:
   BA
   Designated Validation States:
   GE KH MA MD TN

(30) Priority: 16.08.2023  IN 202321054974

(71) Applicant: Tata Consultancy Services Limited
   Maharashtra (IN)

(72) Inventors:
   • KUMAR, Kriti
     560066 Whitefield, Bangalore (IN)
   • CHANDRA, MARISWAMY GIRISH
     560066 Whitefield, Bangalore (IN)
   • KUMAR, ACHANNA ANIL
     560066 Whitefield, Bangalore (IN)
   • MAJUMDAR, Angshul
     110020 New Delhi, Delhi (IN)

(74) Representative: Goddar, Heinz J.
   Boehmert & Boehmert
   Anwaltspartnerschaft mbB
   Pettenkoferstrasse 22
   80336 München (DE)

(54)  **SYSTEM AND METHOD FOR TRANSFORM BASED SUBSPACE INTERPOLATION FOR UNSUPERVISED DOMAIN ADAPTATION FOR MACHINE INSPECTION**

(57)   This disclosure provides a system and method for transform based subspace interpolation for unsupervised domain adaptation for machine inspection. Embodiments of the present disclosure present a deep transform-based subspace interpolation method to cater to challenging unsupervised adaptation scenario for machine inspection of different but related machines. In the present disclosure, source and target domain data are modeled as low-dimensional subspace using deep transforms. The intermediate domains connecting the two domains are then learned to generate domain invariant features for cross-domain classification. The requisite formulation employing deep transform learning and the closed-form updates for the transforms and their corresponding coefficients are presented. The method of the present disclosure demonstrates potential in learning reliable data representations, particularly in limited data scenario and real-life industrial applications requiring adaptation between different machines.

Obtaining, via one or more hardware processors, (i) a plurality of source domain data ($X_s$) comprising a first set of features ($d$) with a plurality of measurements ($n_s$), and (ii) a plurality of target domain data ($X_t$) comprising a second set of features ($d$) with a plurality of — 202

Learning, via the one or more hardware processors, a deep source domain transform ($T_0$) associated with the plurality of source domain data using a N-layer deep transform learning (DTL) architecture, wherein a transform for each layer of N-layer deep source domain transform ($T_0$) is computed for learning the deep source domain transform ($T_0$) — 204

Computing, via the one or more hardware processors, a plurality of coefficients ($Z_0$) on the plurality of source domain data ($X_s$) using the deep source domain transform ($T_0$) — 206

Learning, via one or more hardware processors, a set of intermediate deep transforms associated with a plurality of intermediate domains, wherein the set of intermediate deep transforms associated with the plurality of intermediate domains are learned by iteratively transforming the plurality of target domain data ($X_t$) along a direction that reduces a residue on the plurality of target domain data ($X_t$) till a deep target domain transform ($T_M$) is obtained that best represents the plurality of target domain data ($X_t$), and wherein step of iteratively transforming the plurality of target domain data ($X_t$) comprises: (i) computing, a plurality of coefficients ($Z_m$) corresponding to the plurality of target domain data ($X_t$) by transforming the plurality of target domain data ($X_t$) using a transform of current subspace; (ii) computing the residue on the plurality of target domain data ($X_t$) using a current transform and the plurality of coefficients ($Z_m$) corresponding to the plurality of target domain data ($X_t$); (iii) computing a change in transform of a current subspace to reduce the residue on the plurality of target domain data ($X_t$); and (iv) computing a transform of a subsequent subspace by adding the change in the transform to the transform of the current subspace. — 208

200 ⌐  **FIG. 2**

**Description**

CROSS-REFERENCE TO RELATED APPLICATIONS AND PRIORITY

The present application claims priority from Indian provisional patent application no. 202321054974, filed on August 16, 2023. The entire contents of the aforementioned application are incorporated herein by reference.

TECHNICAL FIELD

The disclosure herein generally relates to the field of subspace interpolation, and, more particularly, to system and method for transform based subspace interpolation for unsupervised domain adaptation for machine inspection.

BACKGROUND

With the advent of Industry 4.0, there has been a lot of interest in prognostics and health monitoring of industrial machines. Health monitoring ensures reliable operation of the machines that help maximize throughput by outage prevention. Off late, many deep learning techniques have been developed that use deep representation learning to extract rich information from machine data for reliable fault analysis. But these techniques assume train data and test data to follow similar distribution and need massive amount of labeled data for training. In most practical machine inspection scenarios, access to data is limited. Moreover, labeled data is difficult to collect as faults are rare events. Additionally, the train and test data do not necessarily follow a similar distribution. Various factors like change in speed, torque, sensor placement, bearing/gearbox specifications, working environment, and/or the like can introduce a domain-shift or discrepancy between the train (i.e., source) and test (i.e., target) data. These factors render traditional methods unsuitable for real-life practical application scenarios and necessitate domain adaptation techniques to ensure a reliable performance of models.

Domain Adaptation (DA) techniques come under a broad category of transfer learning techniques that help in transferring knowledge learned from sufficiently labeled data of a source domain (i.e., training) to data of a target domain (i.e., test), where source and target data have different underlying distributions but cater to same task or application. These techniques are categorized into supervised, semi-supervised, and unsupervised based on the availability of labels of the target domain data.

Recently, different algorithms have been developed based on divergence, adversarial learning, and subspace-based methods for adapting the source domain and the target domain data in an unsupervised manner for different application domains. The former two methods focus on aligning the source and target data distribution by minimizing a divergence and adversarial learning objective, respectively. But they require massive data for training, making them unsuitable for real-life applications with limited data. In contrast, the subspace-based methods seem to work with limited data. These techniques exploit the fact that high-dimensional data often resides in a low-dimensional subspace. Here, the source and target data alignment are either expressed as an affine transformation between the subspaces or obtained by learning intermediate subspaces through interpolation along a virtual path that connects a source and target subspace, to generate domain-invariant features for classification. Subspace-based methods that employ dictionary learning have been extensively used in computer vision. Dictionaries with non-orthogonal atoms provide more flexibility for modeling subspaces and can adapt the domain data more effectively, unlike a domain subspace obtained using Principle Component Analysis (PCA). In addition to Dictionary Learning (DL), Transform Learning (TL) techniques have also been used for subspace modeling. Compared to DL, TL-based methods offer improved accuracy with reduced complexity for different application scenarios.

SUMMARY

Embodiments of the present disclosure present technological improvements as solutions to one or more of the above-mentioned technical problems recognized by the inventors in conventional systems. For example, in one embodiment, a processor implemented method is provided. The processor implemented method, comprising obtaining, via one or more hardware processors, (i) a plurality of source domain data ($X_s$) comprising a first set of features ($d$) with a plurality of measurements ($n_s$), and (ii) a plurality of target domain data ($X_t$) comprising a second set of features ($d$) with a plurality of measurements ($n_t$) for a machine inspection; learning, via the one or more hardware processors, a deep source domain transform ($T_0$) associated with the plurality of source domain data using a N-layer deep transform learning (DTL) architecture, wherein a transform for each layer of N-layer deep source domain transform ($T_0$) is computed for learning the deep source domain transform ($T_0$); computing, via the one or more hardware processors, a plurality of coefficients ($Z_0$) on the plurality of source domain data ($X_s$) using the deep source domain transform ($T_0$); and learning, via one or more hardware processors, a set of intermediate deep transforms associated with a plurality of intermediate domains, wherein the set of intermediate deep transforms associated with the plurality of intermediate domains are learned by iteratively transforming the plurality of target domain data ($X_t$) along a direction that reduces a residue on the plurality of target domain data ($X_t$) till a deep target domain transform ($T_M$) is obtained that best represents the plurality of target domain data ($X_t$), and wherein step of iteratively transforming the plurality of target domain data ($X_t$) comprises: (i) computing, a plurality of coefficients ($Z_m$) corresponding to the plurality of target domain data ($X_t$) by transforming the plurality of target domain data ($X_t$) using a transform of current subspace; (ii) computing the residue on the plurality of target domain data ($X_t$) using a current transform and the plurality of coefficients ($Z_m$) corresponding to the plurality of target domain data ($X_t$); (iii) computing a change in transform of a current subspace to reduce the residue on the plurality of target domain data ($X_t$); and (iv) computing a transform of a subsequent subspace by adding the change in the transform to the transform of the current subspace.

In another aspect, a system is provided. The system comprising a memory storing instructions; one or more communication interfaces; and one or more hardware processors coupled to the memory via the one or more communication interfaces, wherein the one or more hardware processors are configured by the instructions to: obtain (i) a plurality of source domain data ($X_s$) comprising a first set of features ($d$) with a plurality of measurements ($n_s$), and (ii) a plurality of target domain data ($X_t$) comprising a second set of features ($d$) with a plurality of measurements ($n_t$) for a machine inspection; learn a deep source domain transform ($T_0$) associated with the plurality of source domain data using a N-layer deep transform learning (DTL) architecture, wherein a transform for each layer of N-layer deep source domain transform ($T_0$) is computed for learning the deep source domain transform ($T_0$); compute a plurality of coefficients ($Z_0$) on the plurality of source domain data ($X_s$) using the deep source domain transform ($T_0$); and learn a set of intermediate deep transforms associated with a plurality of intermediate domains, wherein the set of intermediate deep transforms associated with the plurality of intermediate domains are learned by iteratively transforming the plurality of target domain data ($X_t$) along a direction that reduces a residue on the plurality of target domain data ($X_t$) till a deep target domain transform ($T_M$) is obtained that best represents the plurality of target domain data ($X_t$), and wherein step of iteratively transforming the plurality of target domain data ($X_t$) comprises: (i) computing, a plurality of coefficients ($Z_m$) corresponding to the plurality of target domain data ($X_t$) by transforming the plurality of target domain data ($X_t$) using a transform of current subspace; (ii) computing the residue on the plurality of target domain data ($X_t$) using a current transform and the plurality of coefficients ($Z_m$) corresponding to the plurality of target domain data ($X_t$); (iii) computing a change in transform of a current subspace to reduce the residue on the plurality of target domain data ($X_t$); and (iv) computing a transform of a subsequent subspace by adding the change in the transform to the transform of the current subspace.

In yet another aspect, a non-transitory computer readable medium is provided. The non-transitory computer readable medium are configured by instructions for obtaining, (i) a plurality of source domain data ($X_s$) comprising a first set of features ($d$) with a plurality of measurements ($n_s$), and (ii) a plurality of target domain data ($X_t$) comprising a second set of features ($d$) with a plurality of measurements ($n_t$) for a machine inspection; learning, a deep source domain transform ($T_0$) associated with the plurality of source domain data using a N-layer deep transform learning (DTL) architecture, wherein a transform for each layer of N-layer deep source domain transform ($T_0$) is computed for learning the deep source domain transform ($T_0$); computing, a plurality of coefficients ($Z_0$) on the plurality of source domain data ($X_s$) using the deep source domain transform ($T_0$); and learning, a set of intermediate deep transforms associated with a plurality of intermediate domains, wherein the set of intermediate deep transforms associated with the plurality of intermediate domains are learned by iteratively transforming the plurality of target domain data ($X_t$) along a direction that reduces a residue on the plurality of target domain data ($X_t$) till a deep target domain transform ($T_M$) is obtained that best represents the plurality of target domain data ($X_t$), and wherein step of iteratively transforming the plurality of target domain data ($X_t$) comprises: (i) computing, a plurality of coefficients ($Z_m$) corresponding to the plurality of target domain data ($X_t$) by transforming the plurality of target domain data ($X_t$) using a transform of current subspace; (ii) computing the residue on the plurality of target domain data ($X_t$) using a current transform and the plurality of coefficients ($Z_m$) corresponding to the plurality of target domain data ($X_t$); (iii) computing a change in transform of a current subspace to reduce the residue on the plurality of target domain data ($X_t$); and (iv) computing a transform of a subsequent subspace by adding the change in the transform to the transform of the current subspace.

In accordance with an embodiment of the present disclosure, the one or more hardware processors are configured to traversing the plurality of coefficients ($Z_0$) across the deep source domain transform ($T_0$), the set of intermediate deep transforms, and the deep target domain transform ($T_M$) to generate a first set of domain invariant features for the plurality of source domain data ($X_s$); training a classifier using the first set of domain invariant features for the plurality of source domain data ($X_s$) and a plurality of source labels ($Y_s$); computing a plurality of coefficients ($Z_M$) on the plurality of target domain data ($X_t$) using the deep target domain transform ($T_M$); traversing the plurality of coefficients ($Z_M$) across the deep source domain transform ($T_0$), the set of intermediate deep transforms, and the deep target domain transform ($T_M$) to generate a second set of domain invariant features for the plurality of target domain data ($X_t$); and estimating a plurality of target labels ($Y_t$) using the second set of domain invariant features for the plurality of target domain data ($X_t$) and the trained classifier.

In accordance with an embodiment of the present disclosure, each of the deep transform is indicative of number of subspace, and wherein the deep source domain transform ($T_0$) indicates a first subspace, an intermediate deep transform ($T_m$) from the set of intermediate deep transforms indicates $m^{th}$ subspace, and the deep target transform ($T_M$) indicates a target subspace.

In accordance with an embodiment of the present disclosure, the deep target domain transform ($T_M$) that best represents the plurality of target domain data ($X_t$) is obtained when the change in the transform of the current subspace is less than an empirically computed threshold.

In accordance with an embodiment of the present disclosure, iteratively transforming the plurality of target domain data ($X_t$) along the direction that reduces the residue on the plurality of target domain data ($X_t$) indicates that a domain shift is fully absorbed by the learnt set of intermediate deep transforms between a source domain ($S$) and a target domain ($T$).

In accordance with an embodiment of the present disclosure, a domain adaptation for machine inspection is performed between machines that are different but related to each other.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system for transform based subspace interpolation for unsupervised domain adaptation for machine inspection, according to some embodiments of the present disclosure.

FIG. 2 illustrates an exemplary flow diagram illustrating a method for transform based subspace interpolation for unsupervised domain adaptation for machine inspection, in accordance with some embodiments of the present disclosure.

FIG. 3 illustrates an exemplary block diagram of a N-layer deep transform learning based unsupervised domain adaptation (DTL-UDA) architecture with M subspaces to absorb the domain shift between $S$ and $T$ data, in accordance with some embodiments of the present disclosure.

FIGS. 4A through 4F depict graphical plots illustrating performance achieved on a target test data with different deep configurations of the method of the present disclosure considering different values of $N$ for six adaptation scenarios, in accordance with some embodiments of the present disclosure.

FIGS. 5A and 5B show graphical plot illustrating residue at different subspaces (domains) of $N$-layer DTL-UDA configurations for two example scenarios, in accordance with some embodiments of the present disclosure.

FIGS. 6A and 6B show graphical plots illustrating accuracy obtained with different subspaces (domains) considered in DTL-UDA configuration for all six adaptation scenarios, in accordance with some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following embodiments described herein.

Machine condition monitoring plays a vital role in the realm of Industry 4.0 manufacturing. Data-driven techniques have become increasingly popular for machine inspection, ensuring reliable operation and minimal downtime by learning complex relationships from data. However, these techniques assume similar distributions between train (source) and test (target) data, which is often not the case in real-life scenarios. Domain discrepancies can arise between the source and target data due to factors like changes in machine operating conditions or location of sensor placement, and/or the like. Moreover, availability of limited data poses an additional challenge. The present disclosure addresses unresolved problems of the conventional approaches by using a method that incorporates deep transform learning-based subspace interpolation for unsupervised domain adaptation. By learning deep transforms to model the source and target domains, and interpolating intermediate domains, domain-invariant features are generated for cross-domain classification. The application of the present disclosure is on bearing fault diagnosis since bearings are critical components for all rotating machinery, often subjected to extreme loads that make them vulnerable to potential damage. Unlike existing adaptation techniques for bearing fault diagnosis, which consider adaptation between different working conditions of the same machine, the present disclosure considers the adaptation between different but related machines, which is often required in practice. For example, to transfer the knowledge acquired using the labeled data from one machine (i.e., a lab setup or simulator) to different but related machines (i.e., industrial machines) for a reliable diagnosis. This is a more challenging adaptation scenario as there exists a significant change in the data distribution of the two domains.

Embodiments of the present disclosure provide a system and method for transform based subspace interpolation for unsupervised domain adaptation for machine inspection. The present disclosure considers a subspace interpolation-based method for UDA similar to a state in the art approach, where subspaces are modeled using dictionaries for face recognition tasks and machine fault diagnosis, respectively. In conventional works, source and target data are modeled using dictionaries, and subspace interpolation is employed to learn intermediate domains along a virtual path connecting the source and target domains that capture the domain shift. Subsequently, domain-invariant features are generated along the source, intermediate, and target domains for classification. Since DL based methods use approximate synthesis sparse coding algorithms, they can be computationally expensive, hence TL based techniques (i.e., analysis equivalent of dictionaries) that offer improved accuracy at reduced complexity with better convergence over dictionaries have gained more popularity, especially in image domain. Owing to these advantages, in the present disclosure a deep Transform Learning (DTL) based formulation is presented for data-limited Unsupervised Domain Adaptation (UDA) via subspace interpolation to adapt the data between different but related machines for fault diagnosis. Deep transforms are employed for learning the mapping between the source and target domain via sub-space interpolation. Interpolated subspaces capture the domain shift between the source and target domain, providing domain-invariant features for cross-domain analysis. The optimization formulation and the requisite solution steps of the deep version are detailed. Additionally, validation with three publicly available datasets and ablation study of different hyperparameters is provided for exhaustive performance analysis of the method of the present disclosure. Experimental results obtained with different machine datasets and comparisons against the dictionary version (i.e., Dictionary Learning for Unsupervised Domain Adaptation (DL-UDA) and Deep Dictionary Learning for Unsupervised Domain Adaptation (DDL-UDA)), and other state-of-the-art techniques are presented. Additionally, low computational complexity and improved performance of TL-based UDA variants over the DL counterparts is observed. It is observed that small-sized transforms perform better than the dictionary variant. More specifically, the present disclosure describes the following:

1. Data-driven transforms are employed for subspace interpolation that connects the source and target domain to generate shared features for cross-domain analysis.
2. A formulation for DTL-UDA and the associated closed-form solution for the transform and coefficients update is presented.
3. This method is employed for machine inspection for the challenging adaptation between different but related machine using time series data.
4. Using publicly available bearing datasets, we provide comparisons against the existing state-of-the-art divergence, adversarial learning, and subspace interpolation-based domain adaptation techniques for performance evaluation. Experimental results on different bearing fault datasets demonstrate the superior performance of the method of the present disclosure, even with limited data are compared to state-of-the-art techniques.

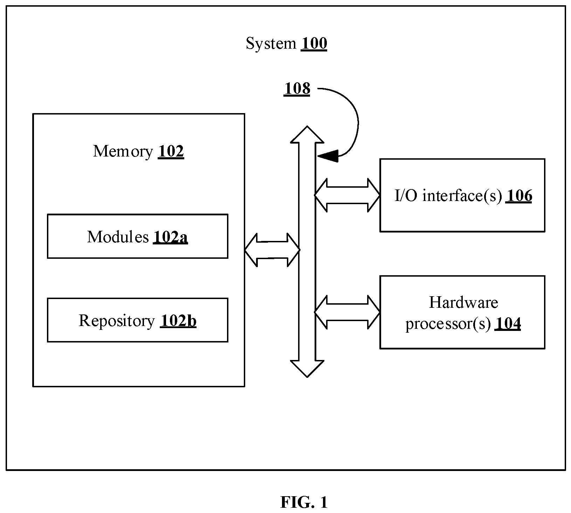

Referring now to the drawings, and more particularly to FIGS. 1 through 6B, where similar reference characters denote corresponding features consistently throughout the figures, there are shown preferred embodiments and these embodiments are described in the context of the following exemplary system and/or method.

FIG. 1 illustrates an exemplary system for transform based subspace interpolation for unsupervised domain adaptation for machine inspection, according to some embodiments of the present disclosure. In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism.

The I/O interface(s) 106 may include a variety of software and hardware interfaces, for example, a web interface, a graphical user interface, and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions 'processors' and 'hardware processors' may be used interchangeably. In an embodiment, the system 100 can be implemented in a variety of computing systems, such as laptop computers, portable computer, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types.

The plurality of modules 102a may include programs or computer-readable instructions or coded instructions that supplement applications or functions performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. Further, the memory 102 may include information pertaining to input(s)/output(s) of each step performed by the processor(s) 104 of the system 100 and methods of the present disclosure.

The repository 102b may include a database or a data engine. Further, the repository 102b amongst other things, may serve as a database or includes a plurality of databases for storing the data that is processed, received, or generated as a result of the execution of the plurality of modules 102a. Although the repository 102b is shown internal to the system 100, it will be noted that, in alternate embodiments, the repository 102b can also be implemented external to the system 100, where the repository 102b may be stored within an external database (not shown in FIG. 1) communicatively coupled to the system 100. The data contained within such external database may be periodically updated. For example, new data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database.

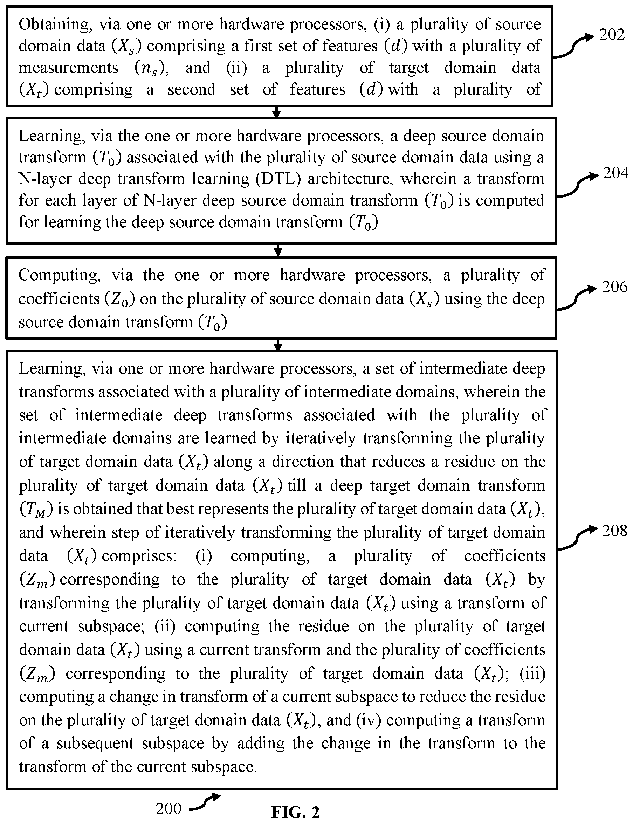

FIG. 2, with reference to FIG. 1, illustrates an exemplary flow diagram illustrating a method for transform based subspace interpolation for unsupervised domain adaptation for machine inspection, using the system 100 of FIG. 1, in accordance with some embodiments of the present disclosure.

Referring to FIG. 2, in an embodiment, the system(s) 100 comprises one or more data storage devices or the memory 102 operatively coupled to the one or more hardware processors 104 and is configured to store instructions for execution of steps of the method by the one or more processors 104. The steps of the method 200 of the present disclosure will now be explained with reference to components of the system 100 of FIG. 1, the flow diagram as depicted in FIG. 2, and one or more examples. Although steps of the method 200 including process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

In an embodiment, at step 202 of the present disclosure, one or more hardware processors are configured to obtain (i) a plurality of source domain data ($X_s$) comprising a first set of features ($d$) with a plurality of measurements ($n_s$), and (ii) a plurality of target domain data ($X_t$) comprising a second set of features ($d$) with a plurality of measurements ($n_t$) for a machine inspection. The present disclosure describes an unsupervised adaptation between a source domain S and a target domain $T$, where the plurality of source domain data ($X_s$) and the plurality of target domain data ($X_t$) have different underlying distributions which means $P(X_s) \neq P(X_t)$. Let $X_s \in \mathbb{R}^{d \times n_s}$ represent the plurality of source domain data with the first set of features (d) with the plurality of measurements ($n_s$) and $X_t \in \mathbb{R}^{d \times n_t}$ represent the plurality of target domain data with the second set of features ($d$) with the plurality of measurements ($n_t$). Given a plurality of labels $Y_s$ of the plurality of source domain data $X_s$, the objective is to estimate a plurality of unknown labels $Y_t$ of the plurality of target domain data $X_t$, assuming feature and label space to be the same for both the domains.

Further, at step 204 of the present disclosure, the one or more hardware processors are configured to learn a deep source domain transform ($T_0$) associated with the plurality of source domain data using a N-layer deep transform learning (DTL) architecture. A transform for each layer of N-layer deep source domain transform ($T_0$) is computed for

learning the deep source domain transform ($T_0$).

At step 206 of the present disclosure, the one or more hardware processors are configured to compute a plurality of coefficients ($Z_0$) on the plurality of source domain data ($X_s$) using the deep source domain transform ($T_0$). Further, at step 208 of the present disclosure, the one or more hardware processors are configured to learn a set of intermediate deep transforms associated with a plurality of intermediate domains. The set of intermediate deep transforms associated with the plurality of intermediate domains are learned by iteratively transforming the plurality of target domain data ($X_t$) along a direction that reduces a residue on the plurality of target domain data ($X_t$) till a deep target domain transform ($T_M$) is obtained that best represents the plurality of target domain data ($X_t$). The step of iteratively transforming the plurality of target domain data ($X_t$) comprises first computing, a plurality of coefficients ($Z_m$) corresponding to the plurality of target domain data ($X_t$) by transforming the plurality of target domain data ($X_t$) using a transform of current subspace. Further, the residue on the plurality of target domain data ($X_t$) using the current transform and the plurality of coefficients ($Z_m$) corresponding to the plurality of target domain data ($X_t$) is computed. Furthermore, a change in transform of a current subspace is computed to reduce the residue on the plurality of target domain data ($X_t$) and a transform of a subsequent subspace is computed by adding the change in the transform to the transform of the current subspace. In an embodiment, each of the deep transform is indicative of number of subspace, and the deep source transform ($T_0$) indicates a first subspace, an intermediate deep transform ($T_m$) from the set of intermediate deep transforms indicates $m^{th}$ subspace, and the deep target transform ($T_M$) indicates a target subspace. The deep target domain transform ($T_M$) that best represents the plurality of target domain data ($X_t$) is obtained when the change in the transform of the current subspace is less than an empirically computed threshold. In an embodiment, iteratively transforming the plurality of target domain data ($X_t$) along the direction that reduces the residue on the plurality of target domain data ($X_t$) indicates that domain shift is fully absorbed by the learnt set of intermediate deep transforms between the source domain ($S$) and the target domain ($T$). A domain adaptation for machine inspection is performed between machines that are different but related to each other.

The steps 204 through 208 are better understood by way of the following description provided as exemplary explanation.

In the present disclosure, transform learning (TL) and deep transform learning are used as underlying basis for the formulation of unsupervised domain adaptation. TL is an analysis approach for learning data representation, where a transform $T$ acts on a data $X$ to produce coefficients $Z$. Mathematically, a basic TL formulation is expressed as shown in equation (1) below:

$$TX = Z \quad (1)$$

Here, $X \in \mathbb{R}^{d \times n}$ a data matrix of $d$ features of length $n$, $T \in \mathbb{R}^{k \times d}$ is transform of $k$ atoms and $Z \in \mathbb{R}^{k \times n}$ are the coefficients.

In order to learn sparse representations from the data, the TL formulation is formally expressed as shown in equation (2) below:

$$\min_{T,Z} \|TX - Z\|_F^2 + \lambda(\|T\|_F^2 - \log det\, T) + \mu\|Z\|_0 \qquad (2)$$

Here, $\lambda$ and $\mu$ are hyperparameters with values > 0 and F represents a frobenius norm. The second term in equation (2) is included to control the condition number and prevent trivial solutions of the learned $T$. While the third term controls the sparsity and ensures that a transform $T$ is learned such that the computed coefficients $Z$ are sparse. The problem in equation (2) can be solved using alternating minimization that results in closed-form updates for $Z$ and $T$ that are presented here for the sake of completeness. The sub-problem and the corresponding closed form update for $Z$ is given as shown in equation (3) and equation (4) below:

$$Z \leftarrow \min_{Z} \|TX - Z\|_F^2 + \mu\|Z\|_0 \qquad (3)$$

$$Z = (abs(TX) \geq \mu).TX \qquad (4)$$

Here, $Z$ is updated via hard thresholding against the value $\mu$ and '.' denotes element-wise product. The closed form update for $T$ is obtained by solving the following sub-problem as shown in equation (5) below:

$$T \leftarrow \min_{T} \|TX - Z\|_F^2 + \lambda(\|T\|_F^2 - \log det\, T) \quad (5)$$

Cholesky decomposition and singular value decomposition are applied to obtain an update for $T$ as shown in equations (6), (7), and (8) below:

$$XX^T + \lambda I = LL^T \quad (6)$$

$$L^{-1} XZ^T = USV^T \quad (7)$$

$$\hat{T} = 0.5V\left(S + (S^2 + 2\lambda I)^{1/2}\right)U^T L^{-1} \quad (8)$$

In contrast to iterative optimization methods such as conjugate gradients, the method of the present disclosure provides improved convergence and effective computation of the transform.

Generally, the formulation for Deep Transform Learning (DTL) can be expressed as multiple basic transforms cascaded together to obtain the coefficients, where the different transforms correspond to different layers of a deep network. The N-layer DTL architecture is given as shown in equation (9) below:

$$T_N \left( \phi \, ... \left( T_2\big(\phi(T_1X)\big) \right) \right) = Z \quad (9)$$

here, $\phi$ denotes an activation function applied between different layers of the deep network. A joint optimization for learning the transforms and coefficients of all layers together is expressed as shown in equation (10) below:

$$\min_{T_i's, Z} \left\| T_N \left( \phi \, ... \left( T_2\big(\phi(T_1X)\big) \right) \right) - Z \right\|_F^2 + \lambda \sum_{i=1}^{N} (\|T_i\|_F^2 - \log det\, T_i) \quad (10)$$

Using variable splitting and an alternating direction method of multipliers (ADMM) technique, the requisite updates for the coefficients and transforms can be obtained.

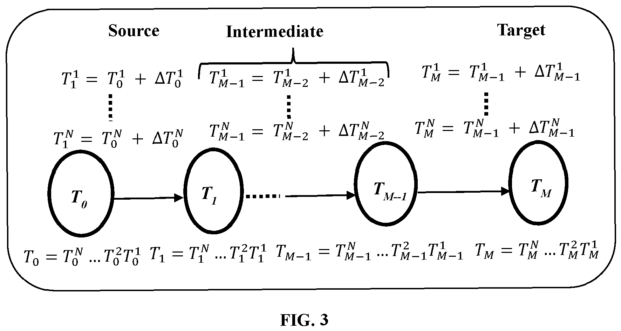

The method of the present disclosure is a subspace interpolation method for domain adaptation, where subspaces are modeled by deep transforms. The multiple layers of transforms (i.e., deep transforms) are able to learn rich representation from the data, resulting in effective modeling of the source $S$, target $T$, and the intermediate domains connecting $S$ and $T$ data. First, the deep source domain transform $T_0 \in \mathbb{R}^{k \times d}$ associated with the plurality of source domain data ($X_s$) is learned. Subsequently, a set of intermediate deep transforms $T_m$, $m \in [1, M - 1]$ (i.e., intermediate domains) is learned by transforming the plurality of target domain data $X_t$ iteratively along the direction that reduces the residue on the plurality of target domain data till $T_M$, the best representation of the plurality of target domain data $X_t$ is achieved. Here, each of the transform $\{T_0 \,...\, , T_M\}$ is made deep by cascading multiple layers of transforms utilizing the DTL formulation. FIG. 3 illustrates an exemplary block diagram of an N-layer deep transform learning based unsupervised domain adaptation (DTL-UDA) architecture with M subspaces to absorb the domain shift between $S$ and $T$ data, in accordance with some embodiments of the present disclosure.

In an embodiment, the one or more hardware processors are further configured to traverse, the plurality of coefficients ($Z_0$) across the deep source domain transform ($T_0$), the set of intermediate deep transforms, and the deep target domain transform ($T_M$) to generate a first set of domain invariant features for the plurality of source domain data ($X_s$). The plurality of coefficients ($Z_0$) are computed on the plurality of source domain data ($X_s$) using the deep source domain transform ($T_0$). Further, a classifier is trained using the first set of domain invariant features for the plurality of source domain data ($X_s$) and a plurality of source labels ($Y_s$). Furthermore, a plurality of coefficients ($Z_M$) are computed on the plurality of target domain data ($X_t$) using the deep target domain transform ($T_M$). The plurality of coefficients ($Z_M$) are traversed across the deep source domain transform ($T_0$), the set of intermediate deep transforms, and the deep target domain transform ($T_M$) to generate a second set of domain invariant features for the plurality of target domain data ($X_t$). Using the second set of domain invariant features for the plurality of target domain data ($X_t$) and the trained classifier, a plurality of target labels ($Y_t$) are estimated.

The method of the present disclosure employs a training phase where a virtual path connecting the $S$ and $T$ data is learned with the help of the deep source domain transform ($T_0$), the set of intermediate deep transforms, and the deep target domain transform ($T_M$). However, learning this transition path does not need label information and is completely unsupervised. This mapping is used to generate the first set of domain-invariant features and the second set of domain-invariant features. Given the plurality of source labels $Y_s$ for $S$ data, the first set of domain-invariant features generated for $X_s$ are utilized for learning the classifier. In the test phase, for the $T$ data, the second set of domain-invariant features are generated for $X_t$, and the plurality of target labels $Y_t$ are estimated using the learnt classifier.

1) Training Phase: Here, the detailed formulation considering $N = 3$ is presented for brevity. However, the formulation can be generalized to any $N$ layers. Let $m = 0$ denote the subspace of the deep source domain, then starting with the deep source domain transform $T_0$, employing a 3-layer deep transform architecture, $T_0 = T_0^3 T_0^2 T_0^1$. The deep transforms for source data $X_s$ are learnt by solving equation (11) provided below:

$$\min_{T_0^3 T_0^2 T_0^1, Z_0} \left\| T_0^3 \left( \phi \left( T_0^2 (\phi(T_0^1 X_s)) \right) \right) - Z_0 \right\|_F^2 + \lambda \sum_{i=1}^{3} \left( \left\| T_0^i \right\|_F^2 - \log \det T_0^i \right) +$$

$$\mu \| Z_0 \|_0 \qquad (11)$$

Here, $\phi$ is the activation function. Here, the deep transforms and coefficients are updated using a greedy approach, considering them one layer at a time with a rectified linear unit (ReLU)-type activation function. Substituting $T_m^N Z_m^{N-1} = Z_m^N$, the 3-layer deep transforms and coefficients for the plurality of source domain data are updated by solving equations (12), (13), and (14) provided below:

$$\min_{T_0^1, Z_0^1} \| T_0^1 X_s - Z_0^1 \|_F^2 + \lambda(\| T_0^1 \|_F^2 - \log \det T_0^1) + \mu \| Z_0^1 \|_0 \qquad (12)$$

$$\min_{T_0^2, Z_0^2} \| T_0^2 Z_0^1 - Z_0^2 \|_F^2 + \lambda(\| T_0^2 \|_F^2 - \log \det T_0^2) + \mu \| Z_0^2 \|_0 \qquad (13)$$

$$\min_{T_0^3, Z_0^3} \| T_0^3 Z_0^2 - Z_0^3 \|_F^2 + \lambda(\| T_0^3 \|_F^2 - \log \det T_0^3) + \mu \| Z_0^3 \|_0 \qquad (14)$$

Here, $Z_0^3 = Z_0$ in equation (11). The multi-layer transforms and coefficients are updated using an alternating minimization approach. The transforms are computed by solving equations (15), (16), and (17) provided below:

$$T_0^1 \leftarrow \min_{T_0^1} \| T_0^1 X_s - Z_0^1 \|_F^2 + \lambda(\| T_0^1 \|_F^2 - \log \det T_0^1) \qquad (15)$$

$$T_0^2 \leftarrow \min_{T_0^2} \| T_0^2 Z_0^1 - Z_0^2 \|_F^2 + \lambda(\| T_0^2 \|_F^2 - \log \det T_0^2) \qquad (16)$$

$$T_0^3 \leftarrow \min_{T_0^3} \| T_0^3 Z_0^2 - Z_0^3 \|_F^2 + \lambda(\| T_0^3 \|_F^2 - \log \det T_0^3) \qquad (17)$$

The sub-problems mentioned in above equations (15), (16) and (17) have a similar form of equation (5) and hence the same closed form updates of equation (6) to (8) can be used to compute them by appropriately changing the input. The sub-problem to solve for the coefficients is similar to equation (3), and hence they follow the same closed-form update given in equation (4).

Considering $M$ subspaces, for $m \in [0, M]$, the $m^{th}$ domain deep transform $T_m = T_m^3 T_m^2 T_m^1$ is subsequently applied on the target data $X_t$ for generating the coefficients $Z_m^3$ (last layer) by solving equation (18) provided below:

$$Z_m^3 \leftarrow \min_{Z_m^3} \|T_m^3 T_m^2 T_m^1 X_t - Z_m^3\|_F^2 + \mu\|Z_m^3\|_0 \qquad (18)$$

Once $Z_m^3$ is computed, the coefficients of the other layers for the $m^{th}$ domain are computed by solving equations (19) and (20) provided below:

$$Z_m^1 \leftarrow \min_{Z_m^1} \|T_m^1 X_t - Z_m^1\|_F^2 + \gamma\|T_m^2 Z_m^1 - Z_m^2\|_F^2 \quad s.t. \quad Z_m^1 \geq 0 \quad (19)$$

$$Z_m^2 \leftarrow \min_{Z_m^2} \|T_m^2 Z_m^1 - Z_m^2\|_F^2 + \gamma\|T_m^3 Z_m^2 - Z_m^3\|_F^2 \quad s.t. \quad Z_m^2 \geq 0 \qquad (20)$$

It is noted that $Z_m^3$ follows the update given in equation (4). However, for other coefficients, as mentioned earlier, a ReLU-type non-linearity is employed between the layers that essentially sets the negative values of the coefficients of each layer to 0. The terms in equations (19) and (20) are expanded in terms of trace and derivative is computed with respect to $Z_m^1$ and $Z_m^2$ respectively. Setting the derivatives to 0, closed form updates for the coefficients are obtained as shown in equations (21) and (22).

$$Z_m^1 = [I + \gamma(T_m^2)^T T_m^2]^{-1}(T_m^1 X_t + \gamma(T_m^2)^T Z_m^2) \quad (21)$$

$$Z_m^2 = [I + \gamma(T_m^3)^T T_m^3]^{-1}(T_m^2 Z_m^1 + \gamma(T_m^3)^T Z_m^3) \qquad (22)$$

In the next step, the coefficients $Z_m^3$ are used to compute the residue $J_m$ on the plurality of target domain data $X_t$ as shown in equation (23) below:

$$J_m = T_m X_t - Z_m^3 = T_m^3 T_m^2 T_m^1 X_t - Z_m^3 \qquad (23)$$

In the direction of reducing the residue further, the transform for the next subspace $T_{m+1}$ is obtained by computing $\Delta T_m' s$ that represents an adjustment in the transform atoms of the different layers $\Delta T_m^1, \ \Delta T_m^2, \ \Delta T_m^3$ between the transforms of adjacent domains $T_{m+1}$ and $T_m$. $\Delta T_m' s$ account for the residue and are obtained by solving equation (24) below:

$$\min_{\Delta T_m^1, \ \Delta T_m^2, \ \Delta T_m^3} \|\Delta T_m^3 \Delta T_m^2 \Delta T_m^1 J_m - Z_m^3\|_F^2 + \lambda \sum_{i=1}^3 \left(\left\|\Delta T_m^i\right\|_F^2 - \log \det \Delta T_m^i\right) \qquad (24)$$

It is noted in equation (23) that while the first term minimizes the residue, the second term discourages abrupt changes in the multi-layer transforms of the adjacent domains. Similar to the previous case, the method of the present disclosure greedily solves for each of the layers one at a time, the results of which are provide in equations (25), (26), and (27) below as:

$$\Delta T_m^1 \leftarrow \min_{\Delta T_m^1} \|\Delta T_m^1 J_m - Z_m^1\|_F^2 + \lambda(\|\Delta T_m^1\|_F^2 - \log \det \Delta T_m^1) \quad (25)$$

$$\Delta T_m^2 \leftarrow \min_{\Delta T_m^2} \|\Delta T_m^2 Z_m^1 - Z_m^2\|_F^2 + \lambda(\|\Delta T_m^2\|_F^2 - \log \det \Delta T_m^2) \quad (26)$$

$$\Delta T_m^3 \leftarrow \min_{\Delta T_m^3} \|\Delta T_m^3 Z_m^2 - Z_m^3\|_F^2 + \lambda(\|\Delta T_m^3\|_F^2 - \log \det \Delta T_m^3) \quad (27)$$

The sub-problems in equations (25), (26) and (27) have a form similar to equation (5), hence they follow the same closed form updates of equations (6) to (8) by appropriately changing the variables. In the subsequent step, the deep transforms for the next subspace (intermediate domain) are updated as shown in equation (28) below as:

$$T_{m+1}^1 = T_m^1 + \eta \Delta T_m^1$$

$$T_{m+1}^2 = T_m^2 + \eta \Delta T_m^2$$

$$T_{m+1}^3 = T_m^3 + \eta \Delta T_m^3 \qquad (28)$$

$$T_{m+1} = T_{m+1}^3 T_{m+1}^2 T_{m+1}^1$$

Here, $\eta$ is introduced to ensure a smooth transition between the deep transforms of the adjacent domains. The new transform $T_{m+1}$ is subsequently applied on the target domain data, and the residue is computed. This process continues iteratively till $\Delta T_m' S$ (for the multiple layers) $\leq \tau$ (threshold), suggesting the domain shift is fully absorbed by the learnt intermediate domains between $S$ and $T$. The last transform $T_M$ is taken as the deep target domain transform since it efficiently represents the target domain data. It is noted that normalization is considered for all the learned transforms, where rows of all the transforms are normalized to unit norm in each iteration. Additionally, same number of atoms *k* are considered for all the multi-layer transforms.

The entire method of the present disclosure is further better understood by way of following pseudocode provided as example:

*Input: Source domain data $X_s$, Target domain data $X_t$*
*Parameters: $\lambda$, $\gamma$, $\tau$, $\eta$, $\mu$, k (number of transform atoms)*
*Initialization:                    Set                    multi-layer                    transforms*
$(T_0^1, T_0^2, T_0^3)$ *to random matrix with real numbers between 0 and 1 drawn from a uniform distribution, subspace m = 0*

*Compute multi-layer source transform $(T_0^1, T_0^2, T_0^3)$ and $Z_0$ with $X_s$ using (11). do*

*Transform $X_t$ with $T_m^1, T_m^2$, and $T_m^3$ and compute , $Z_m^3$ using (18).*
*Estimate $J_m$ (residue) using (23).*

*Compute $\Delta T_m^1, \Delta T_m^2$, and $\Delta T_m^3$ (adjustment in deep transform atoms) using (25), (26) and (27).*

*Update the multi-layer deep transforms $(T_{m+1}^1, T_{m+1}^2, T_{m+1}^3)$, and $T_{m+1}$ using (28).*
*m = m + 1*

*while ( $\Delta T_m' S$ (for the different layers) $\geq \tau$)*

*Output: $\{T_m\}_{m=0}^M$*

(*source, intermediate and target transforms*)
Based on the above pseudocode, the virtual path between S and T is learned, and the deep source, intermediate, and target domain transforms $(\{T_m\}_{m=0}^M)$ thus obtained are used to compute domain invariant features for classification. The domain invariant features are given as: $[(T_0^{-1}Z)^T, (T_1^{-1}Z)^T, ..., (T_M^{-1}Z)^T]$ where $Z \in \mathbb{R}^k$ are the sparse coefficients generated either by transforming source data with $T_0$ (i.e., $Z_0$) or transforming target domain data with $T_M$ (i.e., $Z_M$). Since the plurality of source labels $Y_s$ are known for the source domain data $X_s$, features are computed using $Z_0$ to train a classifier for cross-domain classification.

2) Test Phase: The plurality of target labels $Y_t$ for the target data $X_t$ are estimated by first computing the sparse coefficients $Z_M$ by applying $T_M$ on the plurality of target domain data. Subsequently, features are generated using $Z_M$ across the deep source, intermediate, and target domain transforms. These features are fed to the learned classifier to estimate the plurality of target labels.

**Experimental Results:**

In an embodiment, details of bearing fault datasets, benchmark methods, and evaluation metrics used for assessing the performance of the method of present disclosure (i.e., DTL-UDA) are provided. Subsequently, experimental results, and an ablation study is presented to provide additional insights.

**A. Datasets**

1) CWRU Dataset: This dataset consists of vibration measurements obtained from a drive end and fan end of a machine, with a sampling frequency of 12 kHz. Here, typical bearing faults like, Inner-race Fault (IF), Outer-race Fault (OF), and Bearing-race Fault (BF) of three different sizes (e.g., 0.007, 0.014, 0.021 inches) are created using Electro-Discharge Machining (EDM). The dataset contains healthy (H) and faulty bearing data collected under four different working conditions of loading torques 0, 1, 2, and 3 Hp with speeds of 1797, 1772, 1750, and 1730 rpm, respectively.
2) Paderborn (PU) Dataset: This bearing dataset contains current and vibration data acquired at a sampling frequency of 64 kHz from a test rig that consists of a drive motor, torque measurement shaft, test modules, and a load motor. It contains data for two rotating speeds (e.g., 900 and 1500 rpm) and loading torques (e.g., 0.7 and 0.1 Nm). Data is collected for both healthy (H) and faulty bearings with faults like Inner-race Fault (IF) and Outer-race Fault (OF) and labeled with different bearing codes. In the present disclosure, data corresponding to bearing codes K005, KI04, and KA04 for H, IF, and OF respectively is utilized.
3) Cylindrical Roller Bearing (CRB) Dataset: It contains vibration and acoustic data of cylindrical roller bearing (e.g., NBC: NU205E) acquired from a test rig at a sampling frequency of 70 kHz. Here, three faults, namely Inner-race Fault (IF), Outer-race Fault (OF), and Roller Fault (RF), are created using EDM. The experiments are conducted with a shaft speed of 2050 rpm and a vertical load of 200 N. Four sets containing healthy (H) and faulty bearing data with different defect widths are collected for investigation.

**B. Benchmark Methods**

Different state-of-the-art UDA methods for bearing fault diagnosis are considered for evaluating the performance of the method of the present disclosure. They are broadly classified into (i) divergence-based methods: Multi Kernel Maximum Mean Discrepancy (MK-MMD), Joint Maximum Mean Discrepancy (JMMD), CORrelation ALignment (CORAL), and (ii) adversarial learning-based methods: Domain Adversarial Neural Network (DANN), Conditional Domain Adversarial Network (CDAN). In the present disclosure, all the above-mentioned methods are implemented using a state of the art that uses the same Deep Convolutional Neural Network (DCNN) backbone and bottleneck architecture. Given the knowledge of source labels, these methods jointly optimize a classification loss (alternatively referred as cross entropy loss) and a divergence loss for aligning the S and T data distribution as specified by the respective methods. Additionally, comparisons with a dictionary learning-based interpolation method (DL-UDA) and its deep variant (DDL-UDA) are reported to highlight the performance enhancement achieved with the transform learning version for adaptation tasks. A brief description of these methods is given below.

- **MK-MMD:** The divergence loss for MK-MMD uses multiple kernels to determine the optimal kernel for minimizing a marginal distribution shift between the S and T data.
- **JMMD:** The divergence loss for JMMD aligns the marginal and conditional distribution of the S and T data with the enhancement of auxiliary labels.
- **CORAL:** In this method, the divergence loss is defined to align the second-order statistics of the S and T data for minimizing the domain shift between the two domains.
- **DANN:** This method considers an adversarial objective using a discriminator and generator network to align the marginal distribution of the *S* and *T* data, thereby addressing the domain shift.

- **CDAN:** Here, both marginal and conditional distribution alignment of the *S* and *T* data is considered using the adversarial network.
- **DL-UDA** and **DDL-UDA:** These methods use shallow (N = 1 layer) and deep (N > 1 layers) dictionaries, respectively, for modeling the subspaces between the S and T data that absorbs a domain discrepancy that exists between the two domains.

## C. Evaluation Metrics

In the present disclosure, Precision (*P*), Recall (*R*), F1-score (*F1*), and Accuracy (*Acc*) metrics are considered to assess a classification performance of the different adaptation methods on the target data. Here a multi-class data is dealt with; hence weighted *P*, *R*, and *F*1 are computed. Although *Acc* is the most widely used metric, other metrics provide a holistic assessment of model performance, which is particularly useful when dealing with class-imbalanced data.

## D. Experimental Details

The method of the present disclosure considers adaptation between different but related machines for limited data scenario considering only vibration data. Different datasets form the *S* and *T* data for this case. Table 1 below presents the working conditions and bearing specifications of the different datasets considered in the present disclosure for adaptation.

Table 1

| Parameters | CWRU | CRB | PU |
|---|---|---|---|
| Sampling Frequency (kHz) | 12 | 70 | 64 |
| Speed (rpm) | 1797 | 2050 | 1500 |
| Load | 0Hp | 200N | 1000N |
| Classes | H, IF, OF | H, IF, OF | H, IF, OF |
| **Bearing Specifications** | | | |
| Inner Diameter (mm) | 25 | 25 | 24 |
| Outer Diameter (mm) | 52 | 52 | 33.1 |
| Pitch Diameter (mm) | 39 | 38.9 | 28.55 |
| Rolling Element Diameter (mm) | 7.94 | 7.5 | 6.75 |
| No. of Rolling Elements | 9 | 13 | 8 |
| Defect Size (mm) | 0.1778 | 1.01 (IF), 0.86 (OF) | - |

It is noted that all the three datasets have different operating conditions, bearing specifications, and sampling frequency, making it a challenging adaptation task. In the present disclosure, label-consistent UDA is considered, where the labels of S and T are consistent or the same. Hence, the labels that are common to all the datasets are only employed for adaptation and classification. With the three aforementioned datasets, six combinations of S and T are considered for experimentation.

Experiments were carried out using both raw data and domain-specific features extracted from vibration signals for bearing fault diagnostics. However, for the data-limited case considered in the present disclosure, features were observed to be more effective than using raw data directly. Domain-specific features combined with representation learning capability of different methods resulted in effective adaptation. Hence, in the present disclosure, the results are presented only with domain-specific features as input to all the methods.

Due to unequal sample size of different datasets, the vibration data is pre-processed by splitting into windows of 1 second for feature extraction. In the present disclosure, overlapping windows with different % of overlap for CWRU, CRB and PU, respectively are considered to obtain ≈ 1250 windows from each dataset forming a class-balanced set. This results in 416, 426, and 422 windows for each class for CWRU, CRB and PU, respectively. Five-time domain features relevant to bearing fault detection, namely data peak, kurtosis, variance, RMS, and peak-to-peak value, are extracted from each window. Data is normalized and randomly split into train-test sets with 50% samples of each dataset taken for training and the rest for testing. The hyperparameters for the benchmark methods use same values mentioned in their disclosures.

For dictionary and transform-based methods, they are tuned using grid search. The dictionary and transform-based methods converged with M = 3 and M = 5, respectively. Table 2 and Table 3 provide classification results for different adaptation scenarios.

Table 2

| Methods | CWRU → CRB | | | | CRB → CWRU | | | | CWRU → CRB | | | |
|---|---|---|---|---|---|---|---|---|---|---|---|---|
| | *P* | *R* | *F1* | *Acc* | *P* | *R* | *F1* | *Acc* | *P* | *R* | *F1* | *Acc* |
| MK-MMD | 88. 44 | 82. 94 | 81. 21 | 82.9 4 | 83. 77 | 83. 49 | 79. 55 | 83. 49 | 84. 03 | 72. 86 | 73. 21 | 72. 86 |
| JMMD | 87. 23 | 79. 34 | 76. 27 | 79.3 4 | 81. 54 | 80. 41 | 76. 92 | 80. 41 | 84. 10 | 73. 04 | 73. 40 | 73. 04 |
| CORAL | 84. 71 | 71. 73 | 65. 48 | 71.7 3 | 86. 66 | 77. 59 | 74. 53 | 77. 59 | 83. 34 | 72. 35 | 72. 22 | 72. 35 |
| DANN | 88. 49 | 82. 53 | 81. 17 | 82.5 3 | 85. 13 | 73. 07 | 67. 63 | 73. 07 | 83. 37 | 75. 35 | 75. 81 | 75. 35 |
| CDAN | 87. 86 | 81. 78 | 80. 26 | 81.7 8 | 50. 00 | 66. 67 | 55. 56 | 66. 67 | 83. 27 | 74. 60 | 75. 22 | 74. 60 |
| DL-UDA (*N* = 1, *M* = 3, *k* = 20) | 81. 35 | 81. 08 | 80. 53 | 81.0 8 | 85. 03 | 84. 64 | 80. 48 | 84. 64 | 79. 85 | 80. 36 | 79. 78 | 80. 36 |
| DDL-UDA (*N* = 2, *M* = 3, *k* = 20) | 89. 96 | 87. 19 | 86. 89 | 87.1 9 | 83. 34 | 86. 38 | 80. 18 | 86. 38 | 81. 64 | 81. 60 | 79. 63 | 81. 60 |
| DDL-UDA (*N* = 3, *M* = 3, *k* = 20) | 87. 01 | 89. 90 | 87. 57 | 89.9 0 | 91. 97 | 87. 88 | 85. 07 | 87. 88 | 86. 80 | 82. 30 | 80. 84 | 82. 30 |
| TL-UDA (*N* = 1, *M* = 5, *k* = 5) | 90. 30 | 83. 10 | 79. 88 | 83.1 0 | 91. 93 | 85. 70 | 82. 81 | 85. 70 | 88. 76 | 80. 20 | 76. 64 | 80. 20 |
| DTL-UDA (*N* = 2, *M* = 5, *k* = 5) | 92. 97 | 90. 28 | 89. 86 | 90.2 8 | 85. 90 | 87. 75 | 85. 27 | 87. 75 | 89. 66 | 82. 85 | 81. 03 | 82. 85 |
| DTL-UDA (*N* = 3, *M* = 5, *k* = 5) | **95. 88** | **93. 91** | **93. 33** | **93.9 1** | **93. 46** | **90. 03** | **89. 06** | **90. 03** | **86. 54** | **83. 55** | **83. 04** | **83. 55** |

EP 4 513 387 A1

Table 3

| Methods | CWRU → CRB | | | | CRB → CWRU | | | | CWRU → CRB | | | |
|---|---|---|---|---|---|---|---|---|---|---|---|---|
| | P | R | F1 | Acc | P | R | F1 | Acc | P | R | F1 | Acc |
| MK-MMD | 75.00 | 80.00 | 73.33 | 80.00 | 79.99 | 75.26 | 68.86 | 75.26 | 72.17 | 73.39 | 65.11 | 73.39 |
| JMMD | 69.38 | 76.76 | 71.67 | 76.76 | 89.86 | 82.46 | 78.85 | 82.46 | 66.69 | 74.43 | 66.58 | 74.43 |
| CORAL | 79.38 | 75.00 | 69.51 | 75.00 | 48.24 | 65.21 | 54.18 | 65.21 | 59.87 | 68.79 | 57.94 | 68.79 |
| DANN | 82.26 | 73.27 | 68.86 | 73.27 | 86.20 | 82.37 | 81.74 | 82.37 | 84.68 | 73.05 | 67.48 | 73.05 |
| CDAN | 85.75 | 80.28 | 78.87 | 80.28 | 84.36 | 71.15 | 64.42 | 71.15 | 84.96 | 73.46 | 68.33 | 73.46 |
| DL-UDA (*N* = 1, *M* = 3, *k* = 20) | 69.13 | 78.75 | 72.16 | 78.75 | 84.52 | 78.42 | 74.74 | 78.42 | 81.33 | 79.71 | 78.69 | 79.71 |
| DDL-UDA (*N* = 2, *M* = 3, *k* = 20) | 83.98 | 82.98 | 78.56 | 82.98 | 83.76 | 79.62 | 78.91 | 79.62 | 85.65 | 83.22 | 82.24 | 83.22 |
| DDL-UDA (*N* = 3, *M* = 3, *k* = 20) | 85.05 | 85.06 | 80.61 | 85.06 | 86.85 | 84.16 | 83.23 | 84.16 | 89.51 | 86.44 | 83.74 | 86.44 |
| TL-UDA (*N* = 1, *M* = 5, *k* = 5) | 90.32 | 82.17 | 77.41 | 82.17 | 89.29 | 81.13 | 76.97 | 81.13 | 87.89 | 84.39 | 82.48 | 84.39 |
| DTL-UDA (*N* = 2, *M* = 5, *k* = 5) | 91.50 | 85.67 | 83.65 | 85.67 | 88.89 | 84.16 | 81.77 | 84.16 | 91.11 | 88.59 | 88.26 | 88.59 |
| DTL-UDA (*N* = 3, *M* = 5, *k* = 5) | **93.62** | **89.82** | **88.72** | **89.82** | **91.59** | **89.44** | **89.29** | **89.44** | **94.48** | **94.02** | **93.95** | **94.02** |

The results in Table 2 and Table 3 present atom size ($k$), number of subspaces ($M$), and number of layers ($N$) employed for the DL-UDA, DDL-UDA, and DTL-UDA methods. Similar to DL-UDA, SVM classifier is used in the present disclosure, but in general, any appropriate classifier can be employed.

## E. Performance Comparison

The results summarized in Table 2 and Table 3 present the performance averaged over five random train-test sets of the $S$ and $T$ data for all six adaptation scenarios with the best-performing method for each scenario highlighted in bold. The notation $S \rightarrow T$ denotes an adaptation from source (labeled) to target (unlabeled). From Table 2 and Table 3, it is observed that the method of the present disclosure (i.e., DTL-UDA method) with N=3 layers outperforms all the other benchmark methods for all the combinations. Except for $CRB \rightarrow CWRU$, the best-performing adversarial-based and divergence-based techniques for each of the other scenarios show comparable performance. It is noted that these benchmark methods were developed to address adaptation between different working conditions of same machine and have not been applied for adaptation between different machines. Since domain features are fed as input to these methods, they are able to work for the challenging data-limited scenario of adaptation between machines that are different but related to each other. The benchmark methods are designed to work with large data sets and hence perform poorly compared to the method of the present disclosure, which works well even for limited data scenario. The subspace interpolation-based technique modeled using dictionaries and transforms (and their deep variants) result in improved performance for all the adaptation scenarios over the DCNN-based methods. They are able to learn the mapping between the $S$ and $T$ more efficiently, even with limited training data. Among the two subspace-based techniques employing DL and TL, with small-sized transforms ($k = 5$, square transform), single-layer DTL-UDA ($N = 1$) performs better than single-layer DL-UDA ($k = 20$, overcomplete dictionary). Trend is same even for deep variants (i.e., DDL-UDA and DTL-UDA), which demonstrate computational advantage of using transforms over dictionaries for subspace modeling tasks. Performance improvement with the deep variants compared to the single-layer variants is easily observed. Here, 3-layer DTL-UDA gave the best performance for all the cases.

The method of the present disclosure provides an accuracy improvement of $\geq 10\%$ over the best-performing DCNN-based adaptation methods for most adaptation cases. Additionally, the method of the present disclosure displays superior performance over dictionary counterparts. Hybrid approach combining domain-specific features with representation learning using transforms provides an effective adaptation for data-limited scenario considered in the present disclosure. The results demonstrate applicability of the domain-specific features and subspace-based method of the present disclosure for adapting the knowledge learned from one machine ($S$) to another machine ($T$) for bearing fault detection.

## F. Ablation Studies

To gain more insights, different experiments were conducted in the present disclosure to study the effect of the number of layers and subspaces on the performance of the method of the present disclosure (i.e., DTL-UDA).

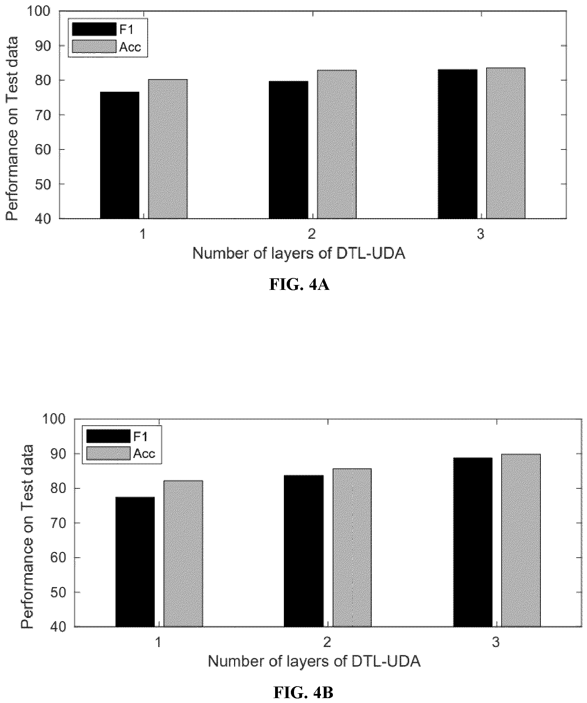

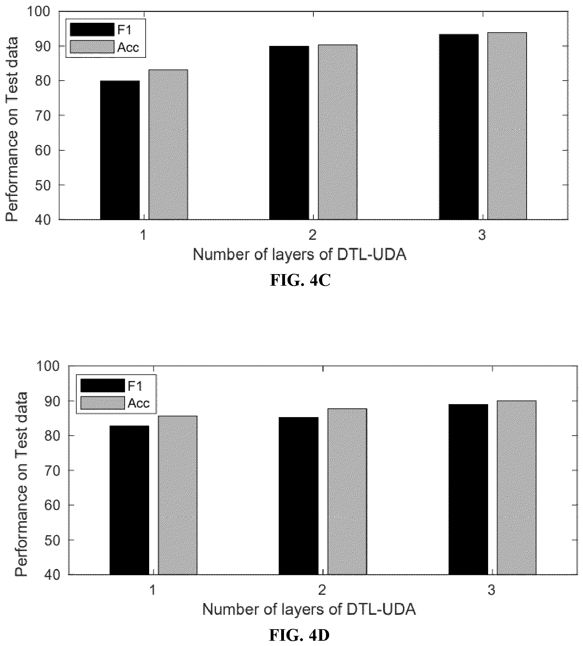

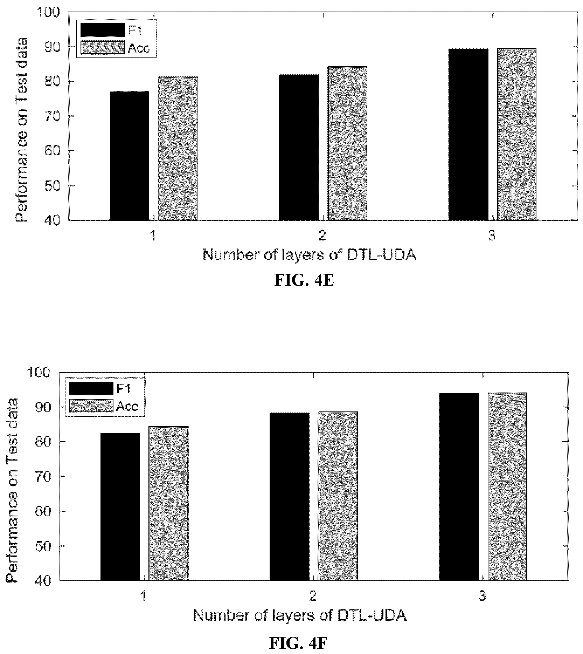

1) **Effect of number of layers,** N: FIGS. 4A through 4F depict graphical plots illustrating performance achieved on a target test data with different deep configurations of the method of the present disclosure considering different values of $N$ for all the six adaptation scenarios, in accordance with some embodiments of the present disclosure. With going deep (to some extent), a significant performance improvement is observed, both in terms of $F$1 and $Acc$. The reason for this can be attributed to the fact that deep models have an ability to learn more complex relationships from data, in contrast to shallow (single-layer) variant. It can be seen that a 3- layer deep model displays superior performance in terms of both metrics for all six scenarios. Going beyond $N = 3$ did not help boost the accuracy further, possibly due to limited data availability. As the number of layers of DTL-UDA increases, number of trainable parameters also increases. Hence, more data is required to learn an effective representation. For data-limited scenario considered in the present disclosure, 3-layer DTL-UDA achieved optimal performance, and therefore results are restricted to this configuration.

2) **Effect of number of subspaces,** M: Here, experiments are conducted with DTL-UDA considering different number of subspaces that connect the $S$ and $T$ domains to study an effect on the following:

    (a) Reconstruction residue on target training data, $J_m$ and
    (b) Accuracy on target test data.

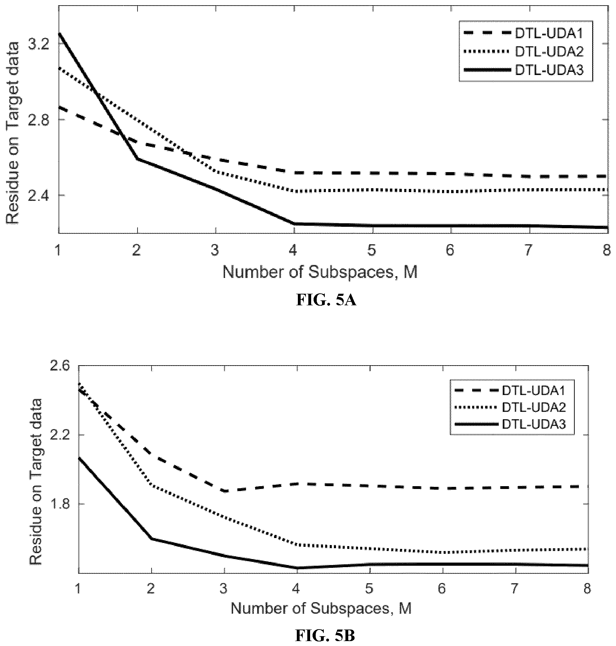

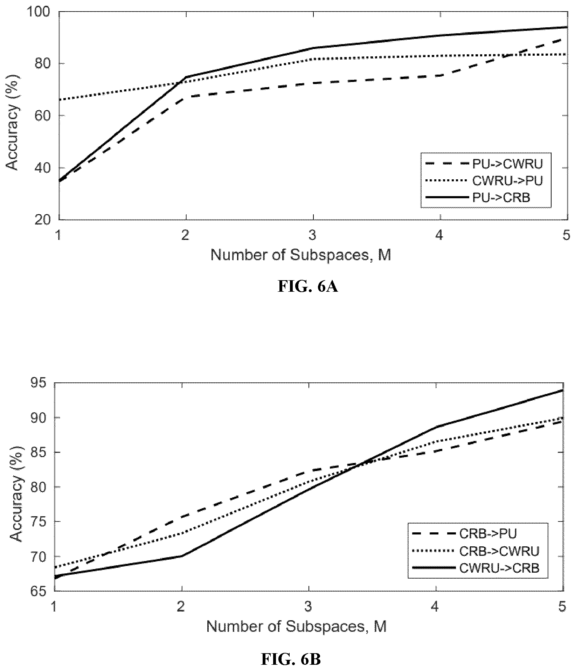

FIGS. 5A and 5B shows graphical plot illustrating residue at different subspaces (domains) of $N$-layer DTL-UDA configurations for two example scenarios, in accordance with some embodiments of the present disclosure. The two example scenarios are CWRU $\rightarrow$ PU and CRB $\rightarrow$ PU, respectively. It is noted that the reconstruction residue keeps decreasing with increase in the number of subspaces for all the configurations. This is in conformance with the method of the present disclosure as the transforms that model each subsequent subspace are computed in such a way that they reduce the residue on the target data. Also, it is noted that for all DTL-UDA configurations, $J_m$ is highest for $M = 1$, where the transforms learned using the source domain data are directly applied on the target data. It can be seen for both the scenarios in FIGS. 5A and 5B that the residue saturates after $M = 5$, showing convergence of the optimization formulation. This indicates that the transform learned for $M = 5$ represents the target data well, and further interpolation is not required. Additionally, it is seen that the residue of the 3-layer DTL-UDA is comparatively less compared to the 1 and 2-layer configuration for $M > 1$, indicating better modeling capability of the deep network. To study the effect of $M$ on the test accuracy of target data, different DTL-UDA configurations are learnt considering different values of $M$. FIGS. 6A and 6B show graphical plots illustrating accuracy obtained with different subspaces (domains) considered in DTL-UDA configuration for all six adaptation scenarios, in accordance with some embodiments of the present disclosure. A 3-layer DTL-UDA configuration is employed here since it performs the best for all the adaptation scenarios. The DTL-UDA configuration for $M = 1$ represents a case of no adaptation, where the transforms learned using the source domain data ($T_0$) are applied directly on the target data to generate the second set of domain invariant features. The second set of domain invariant features are fed to the classifier trained on source domain data to predict the plurality of target labels ($Y_t$). In FIGS. 6A an 6B, it can be seen that the accuracy is poor for this case across all datasets since the domain discrepancy between the $S$ and $T$ data is not addressed. As the value of M increases, the performance improves, with the highest accuracy achieved for the DTL-UDA configuration with $M = 5$, which is in conformance with the graphical plots illustrating residue in FIGS. 5A and 5B. Low residue on target training data indicates better adaptation capability, resulting in better accuracy on target test data. A significant improvement in accuracy is obtained with adaptation compared to the DTL-UDA configuration without adaptation across different datasets. This demonstrates that the intermediate subspaces effectively absorb the domain shift between $S$ and $T$ well, resulting in robust adaptation. Table 2 and Table 3 present results obtained with the best-performing DTL-UDA configuration obtained through this ablation study.

Embodiments of the present disclosure present a deep transform-based subspace interpolation method to cater to challenging unsupervised adaptation scenario of different but related machines. Here, the source and target domain data are modeled as low-dimensional subspace using deep transforms. The intermediate domains connecting the two domains are then learned to generate domain invariant features for cross-domain classification. The requisite formulation employing deep transform learning and the closed-form updates for the transforms and their corresponding coefficients are presented. Experiments conducted on three publicly available bearing datasets demonstrate the effectiveness of the method of the present disclosure compared to state-of-the-art methods. This highlights the potential of the deep transforms-based approach of the present disclosure in learning reliable data representations, particularly in the limited data scenario. Thus, the method of the present disclosure demonstrates the potential for real-life industrial applications requiring adaptation between different machines.

The written description describes the subject matter herein to enable any person skilled in the art to make and use the embodiments. The scope of the subject matter embodiments is defined herein and may include other modifications that occur to those skilled in the art. Such other modifications are intended to be within the scope of the present disclosure if they have similar elements that do not differ from the literal language of the embodiments or if they include equivalent elements with insubstantial differences from the literal language of the embodiments described herein.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated herein by the following claims.

## Claims

1. A processor implemented method (200), comprising:

   obtaining (202), via one or more hardware processors, (i) a plurality of source domain data ($X_s$) comprising a first set of features ($d$) with a plurality of measurements ($n_s$), and (ii) a plurality of target domain data ($X_t$) comprising a second set of features ($d$) with a plurality of measurements ($n_t$) for a machine inspection;
   learning (204), via the one or more hardware processors, a deep source domain transform ($T_0$) associated with the plurality of source domain data using a N-layer deep transform learning (DTL) architecture, wherein a transform for each layer of N-layer deep source domain transform ($T_0$) is computed for learning the deep source domain transform ($T_0$);
   computing (206), via the one or more hardware processors, a plurality of coefficients ($Z_0$) on the plurality of source domain data ($X_s$) using the deep source domain transform ($T_0$); and
   learning (208), via one or more hardware processors, a set of intermediate deep transforms associated with a plurality of intermediate domains, wherein the set of intermediate deep transforms associated with the plurality of intermediate domains are learned by iteratively transforming the plurality of target domain data ($X_t$) along a direction that reduces a residue on the plurality of target domain data ($X_t$) till a deep target domain transform ($T_M$) is obtained that best represents the plurality of target domain data ($X_t$), and wherein step of iteratively transforming the plurality of target domain data ($X_t$) comprises:

   (i) computing, a plurality of coefficients ($Z_m$) corresponding to the plurality of target domain data ($X_t$) by transforming the plurality of target domain data ($X_t$) using a transform of current subspace;
   (ii) computing the residue on the plurality of target domain data ($X_t$) using a current transform and the plurality of coefficients ($Z_m$) corresponding to the plurality of target domain data ($X_t$);
   (iii) computing a change in transform of a current subspace to reduce the residue on the plurality of target domain data ($X_t$); and
   (iv) computing a transform of a subsequent subspace by adding the change in the transform to the transform of the current subspace.

2. The processor implemented method as claimed in claim 1, comprising:

   traversing the plurality of coefficients ($Z_0$) across the deep source domain transform ($T_0$), the set of intermediate deep transforms, and the deep target domain transform ($T_M$) to generate a first set of domain invariant features for the plurality of source domain data ($X_s$);
   training a classifier using the first set of domain invariant features for the plurality of source domain data ($X_s$) and a plurality of source labels ($Y_s$);
   computing a plurality of coefficients ($Z_M$) on the plurality of target domain data ($X_t$) using the deep target domain transform ($T_M$);

traversing the plurality of coefficients ($Z_M$) across the deep source domain transform ($T_0$), the set of intermediate deep transforms, and the deep target domain transform ($T_M$) to generate a second set of domain invariant features for the plurality of target domain data ($X_t$); and

estimating a plurality of target labels ($Y_t$) using the second set of domain invariant features for the plurality of target domain data ($X_t$) and the trained classifier.

3. The processor implemented method as claimed in claim 1, wherein each of the deep transform is indicative of number of subspace, and wherein the deep source domain transform ($T_0$) indicates a first subspace, an intermediate deep transform ($T_m$) from the set of intermediate deep transforms indicates $m^{th}$ subspace, and the deep target transform ($T_M$) indicates a target subspace.

4. The processor implemented method as claimed in claim 1, wherein the deep target domain transform ($T_M$) that best represents the plurality of target domain data ($X_t$) is obtained when the change in the transform of the current subspace is less than an empirically computed threshold.

5. The processor implemented method as claimed in claim 1, wherein iteratively transforming the plurality of target domain data ($X_t$) along the direction that reduces the residue on the plurality of target domain data ($X_t$) indicates that a domain shift is fully absorbed by the learnt set of intermediate deep transforms between a source domain (S) and a target domain (T).

6. The processor implemented method as claimed in claim 1, wherein a domain adaptation for machine inspection is performed between machines that are different but related to each other.

7. A system (100), comprising:

a memory (102) storing instructions;
one or more communication interfaces (106); and
one or more hardware processors (104) coupled to the memory (102) via the one or more communication interfaces (106), wherein the one or more hardware processors (104) are configured by the instructions to:

obtain (i) a plurality of source domain data ($X_s$) comprising a first set of features ($d$) with a plurality of measurements ($n_s$), and (ii) a plurality of target domain data ($X_t$) comprising a second set of features ($d$) with a plurality of measurements ($n_t$) for a machine inspection;
learn a deep source domain transform ($T_0$) associated with the plurality of source domain data using a N-layer deep transform learning (DTL) architecture, wherein a transform for each layer of N-layer deep source domain transform ($T_0$) is computed for learning the deep source domain transform ($T_0$);
compute a plurality of coefficients ($Z_0$) on the plurality of source domain data ($X_s$) using the deep source domain transform ($T_0$); and
learn a set of intermediate deep transforms associated with a plurality of intermediate domains, wherein the set of intermediate deep transforms associated with the plurality of intermediate domains are learned by iteratively transforming the plurality of target domain data ($X_t$) along a direction that reduces a residue on the plurality of target domain data ($X_t$) till a deep target domain transform ($T_M$) is obtained that best represents the plurality of target domain data ($X_t$), and wherein step of iteratively transforming the plurality of target domain data ($X_t$) comprises:

(i) computing, a plurality of coefficients ($Z_m$) corresponding to the plurality of target domain data ($X_t$) by transforming the plurality of target domain data ($X_t$) using a transform of current subspace;
(ii) computing the residue on the plurality of target domain data ($X_t$) using a current transform and the plurality of coefficients ($Z_m$) corresponding to the plurality of target domain data ($X_t$);
(iii) computing a change in transform of a current subspace to reduce the residue on the plurality of target domain data ($X_t$); and
(iv) computing a transform of a subsequent subspace by adding the change in the transform to the transform of the current subspace.

8. The system as claimed in claim 7, wherein the one or more hardware processors are further configured by the instructions to:

traverse the plurality of coefficients ($Z_0$) across the deep source domain transform ($T_0$), the set of intermediate deep transforms, and the deep target domain transform ($T_M$) to generate a first set of domain invariant features for the plurality of source domain data ($X_s$);

train a classifier using the first set of domain invariant features for the plurality of source domain data ($X_s$) and a plurality of source labels ($Y_s$);

compute a plurality of coefficients ($Z_M$) on the plurality of target domain data ($X_t$) using the deep target domain transform ($T_M$);

traverse the plurality of coefficients ($Z_M$) across the deep source domain transform ($T_0$), the set of intermediate deep transforms, and the deep target domain transform ($T_M$) to generate a second set of domain invariant features for the plurality of target domain data ($X_t$); and

estimate a plurality of target labels ($Y_t$) using the second set of domain invariant features for the plurality of target domain data ($X_t$) and the trained classifier.

9. The system as claimed in claim 7, wherein each of the deep transform is indicative of number of subspace, and wherein the deep source transform ($T_0$) indicates a first subspace, an intermediate deep transform ($T_m$) from the set of intermediate deep transforms indicates $m^{th}$ subspace, and the deep target transform ($T_M$) indicates a target subspace.

10. The system as claimed in claim 7, wherein the deep target domain transform ($T_M$) that best represents the plurality of target domain data ($X_t$) is obtained when the change in the transform of the current subspace is less than an empirically computed threshold.

11. The system as claimed in claim 7, wherein iteratively transforming the plurality of target domain data ($X_t$) along the direction that reduces the residue on the plurality of target domain data ($X_t$) indicates that domain shift is fully absorbed by the learnt set of intermediate deep transforms between a source domain ($S$) and a target domain ($T$).

12. The system as claimed in claim 7, wherein a domain adaptation for machine inspection is performed between machines that are different but related to each other.

13. One or more non-transitory computer readable mediums comprising one or more instructions which when executed by one or more hardware processors cause:

obtaining (i) a plurality of source domain data ($X_s$) comprising a first set of features ($d$) with a plurality of measurements ($n_s$), and (ii) a plurality of target domain data ($X_t$) comprising a second set of features ($d$) with a plurality of measurements ($n_t$) for a machine inspection;

learning a deep source domain transform ($T_0$) associated with the plurality of source domain data using a N-layer deep transform learning (DTL) architecture, wherein a transform for each layer of N-layer deep source domain transform ($T_0$) is computed for learning the deep source domain transform ($T_0$);

computing a plurality of coefficients ($Z_0$) on the plurality of source domain data ($X_s$) using the deep source domain transform ($T_0$); and

learning a set of intermediate deep transforms associated with a plurality of intermediate domains, wherein the set of intermediate deep transforms associated with the plurality of intermediate domains are learned by iteratively transforming the plurality of target domain data ($X_t$) along a direction that reduces a residue on the plurality of target domain data ($X_t$) till a deep target domain transform ($T_M$) is obtained that best represents the plurality of target domain data ($X_t$), and wherein step of iteratively transforming the plurality of target domain data ($X_t$) comprises:

(i) computing, a plurality of coefficients ($Z_m$) corresponding to the plurality of target domain data ($X_t$) by transforming the plurality of target domain data ($X_t$) using a transform of current subspace;

(ii) computing the residue on the plurality of target domain data ($X_t$) using a current transform and the plurality of coefficients ($Z_m$) corresponding to the plurality of target domain data ($X_t$);

(iii) computing a change in transform of a current subspace to reduce

the residue on the plurality of target domain data ($X_t$); and computing a transform of a subsequent subspace by adding the change in the transform to the transform of the current subspace.

**FIG. 1**

Obtaining, via one or more hardware processors, (i) a plurality of source domain data $(X_s)$ comprising a first set of features $(d)$ with a plurality of measurements $(n_s)$, and (ii) a plurality of target domain data $(X_t)$ comprising a second set of features $(d)$ with a plurality of ⟶ 202

Learning, via the one or more hardware processors, a deep source domain transform $(T_0)$ associated with the plurality of source domain data using a N-layer deep transform learning (DTL) architecture, wherein a transform for each layer of N-layer deep source domain transform $(T_0)$ is computed for learning the deep source domain transform $(T_0)$ ⟶ 204

Computing, via the one or more hardware processors, a plurality of coefficients $(Z_0)$ on the plurality of source domain data $(X_s)$ using the deep source domain transform $(T_0)$ ⟶ 206

Learning, via one or more hardware processors, a set of intermediate deep transforms associated with a plurality of intermediate domains, wherein the set of intermediate deep transforms associated with the plurality of intermediate domains are learned by iteratively transforming the plurality of target domain data $(X_t)$ along a direction that reduces a residue on the plurality of target domain data $(X_t)$ till a deep target domain transform $(T_M)$ is obtained that best represents the plurality of target domain data $(X_t)$, and wherein step of iteratively transforming the plurality of target domain data $(X_t)$ comprises: (i) computing, a plurality of coefficients $(Z_m)$ corresponding to the plurality of target domain data $(X_t)$ by transforming the plurality of target domain data $(X_t)$ using a transform of current subspace; (ii) computing the residue on the plurality of target domain data $(X_t)$ using a current transform and the plurality of coefficients $(Z_m)$ corresponding to the plurality of target domain data $(X_t)$; (iii) computing a change in transform of a current subspace to reduce the residue on the plurality of target domain data $(X_t)$; and (iv) computing a transform of a subsequent subspace by adding the change in the transform to the transform of the current subspace. ⟶ 208

200 ⟶     **FIG. 2**

**FIG. 3**

**FIG. 4A**

**FIG. 4B**

**FIG. 4C**

**FIG. 4D**

**FIG. 4E**

**FIG. 4F**

**FIG. 5A**

**FIG. 5B**

**FIG. 6A**

**FIG. 6B**

Europäisches
Patentamt

European
Patent Office

Office européen
des brevets

# EUROPEAN SEARCH REPORT

**Application Number**

EP 24 19 1228

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Xu Tongkun ET AL: "CDTRANS: CROSS-DOMAIN TRANSFORMER FOR UN-SUPERVISED DOMAIN ADAPTATION", , 19 March 2022 (2022-03-19), XP093239179, Retrieved from the Internet: URL:https://arxiv.org/pdf/2109.06165 [retrieved on 2025-01-14] * abstract * * page 1 - page 9 * | 1-13 | INV. G06N3/096 G06N3/045 |
| A | Rao Pratyaksh Prabhav ET AL: "QuadFormer: Quadruple Transformer for Unsupervised Domain Adaptation in Power Line Segmentation of Aerial Images", , 29 November 2022 (2022-11-29), XP093239700, Retrieved from the Internet: URL:https://arxiv.org/pdf/2211.16988 [retrieved on 2025-01-15] * the whole document * | 1-13 | |
| A | WU JHIH-CIANG ET AL: "Learning Unsupervised Metaformer for Anomaly Detection", 2021 IEEE/CVF INTERNATIONAL CONFERENCE ON COMPUTER VISION (ICCV), IEEE, 10 October 2021 (2021-10-10), pages 4349-4358, XP034093067, DOI: 10.1109/ICCV48922.2021.00433 [retrieved on 2022-02-10] * the whole document * | 1-13 | TECHNICAL FIELDS SEARCHED (IPC) G06N |

The present search report has been drawn up for all claims

| Place of search | Date of completion of the search | Examiner |
|---|---|---|
| The Hague | 15 January 2025 | Tsakonas, Athanasios |

EPO FORM 1503 03.82 (P04C01)

**EP 4 513 387 A1**

**Patent documents cited in the description**

- IN 202321054974